# FASCICULE DE BREVET EUROPEEN

(11) **EP 2 780 230 B1**
(45) Date de publication et mention de la délivrance du brevet: **30.09.2015**
(21) Numéro de dépôt: 12795510.2
(22) Date de dépôt: 09.11.2012
(51) Int. Cl.: B64D 13/06, B64D 41/00

(54) **PROCÉDÉ ET ARCHITECTURE DE RÉCUPÉRATION D'ÉNERGIE DANS UN AÉRONEF**
VERFAHREN UND ARCHITEKTUR ZUR ENERGIERÜCKGEWINNUNG IN EINEM FLUGZEUG
METHOD AND ARCHITECTURE FOR RECOVERY OF ENERGY IN AN AIRCRAFT

(30) Priorité: 17.11.2011 FR 1160471
(43) Date de publication de la demande: 24.09.2014
(73) Titulaire: Turbomeca, 64510 Bordes (FR)
(72) Inventeur: HOUSSAYE, Laurent, F-64110 Saint Faust (FR)
(74) Mandataire: Gevers France
(86) Numéro de dépôt international: PCT/FR2012/052585
(87) Numéro de publication internationale: WO 2013/072603

(56) Documents cités:
- US-A- 2 777 301
- US-A- 4 419 926

## Description

### DOMAINE TECHNIQUE

L'invention concerne un procédé de récupération optimisée de l'énergie dissipée dans un aéronef et une architecture apte à mettre en oeuvre ce procédé.

L'invention s'applique aux aéronefs équipés de cabines pressurisables, en particuliers aux avions commerciaux.

Classiquement, les sources d'énergie dans un aéronef qu'il convient de récupérer pour en maîtriser la consommation sont de deux types : la pression de l'air de la cabine passagers pressurisée en altitude et la chaleur dissipée dans les chaînes thermiques (conditionnement d'air, air cabine, gaz d'échappement).

La récupération de ces énergies permet de minimiser les dimensions, les masses et la consommation nécessaire *in fine* pour une même fourniture aux consommateurs d'énergie non propulsive, c'est-à-dire pneumatique et électrique.

### ÉTAT DE LA TECHNIQUE

La disponibilité de l'air pressurisé en cabine n'est possible qu'en vol et la récupération de cette énergie est donc limitée en altitude où le taux de pressurisation de la cabine, de l'ordre de 3, est alors suffisant. Les solutions existantes font intervenir un turbocompresseur ou une turbine de récupération, une source électrique ou pneumatique d'entraînement, un compresseur de charge et un échangeur de chaleur.

Il est par exemple connu du document de brevet US 4419926 d'utiliser le compresseur d'un turbocompresseur pour contribuer à fournir un étage supplémentaire d'air comprimé au compresseur de charge d'alimentation aux packs de conditionnement d'air ECS (ECS étant les initiales de « Environmental Control System » en terminologie anglaise). La puissance ou la consommation du moteur électrique d'entraînement du compresseur de charge est alors diminuée. De plus, la turbine de récupération du turbocompresseur, alimentée par l'air pressurisé en sortie de cabine, permet de refroidir l'air comprimé, ce qui diminue l'effort de compression global et donc la consommation ou la taille du moteur électrique.

En variante, il est connu de n'utiliser qu'une turbine de récupération pour entraîner le compresseur de charge via un alternateur ou autre système de génération électrique. Un échange thermique peut alors être prévu entre l'air en sortie de cabine et l'air comprimé par le compresseur de charge afin de diminuer la température du flux en sortie du compresseur. Cette diminution de température autorise alors un moindre taux de compression sans nuire aux performances de l'ECS, et donc une diminution de consommation.

Cependant ces architectures sont limitées à la récupération d'énergie en altitude car, à basse altitude ou au sol - lorsque le taux de pressurisation est insuffisant ou nul -, il n'est pas possible de disposer d'air pressurisé en sortie de cabine. Au sol, une ventilation pneumatique de la cabine est assurée dans la pratique par un petit turbomoteur, comportant un générateur de gaz couplé à une tuyère d'échappement de ces gaz, formant un groupe auxiliaire de puissance ou APU (initiales de « Auxiliary Power Unit » en terminologie anglaise). Le groupe APU sert également au démarrage des moteurs principaux et à la fourniture d'énergie électrique ou pneumatique à différents consommateurs (pompes, compresseur de charge, moteurs, etc.). Un tel groupe APU peut être embarqué dans l'aéronef ou connecté au sol aux différents organes à alimenter. Dans certains cas, des APU sont suffisamment sécurisés pour intervenir en vol et suppléer si besoin, partiellement ou même totalement, les moteurs principaux dans la fourniture de puissance non propulsive aux consommateurs.

Le document US 2 777 301 divulgue comme art antérieur le plus proche un procédé de récupération d'énergie dont le procédé selon l'invention diffère en ce que:
- le système de conditionnement d'air est alimenté par un compresseur de charge,
- en mode "sol", le turbocompresseur de récupération produit un complément d'énergie mécanique à la génération auxiliaire de puissance, et
- en mode "altitude, la compression est en outre fournie par le compresseur de charge.

### EXPOSÉ DE L'INVENTION

L'invention vise à permettre une récupération optimisée d'énergie, en altitude mais également au sol, à l'aide d'une même architecture. A cette fin, l'invention prévoit de récupérer, lorsque l'avion est au sol, de l'énergie thermique à l'échappement pour contribuer à la compression de l'air ventilé dans la cabine, au conditionnement d'air ainsi que, en altitude, à la compression de l'air conditionné pressurisé.

Plus précisément, la présente invention a pour objet un procédé de récupération d'énergie dans un aéronef équipé d'une cabine de passagers à flux d'air régulé en pression et en température à l'aide d'un système de conditionnent d'air ECS alimenté par un compresseur de charge, et d'une génération auxiliaire de puissance. Le procédé consiste à prévoir que :
- lorsque l'aéronef est au sol dit « mode sol », l'énergie thermique dissipée par la génération auxiliaire de puissance (énergie autrement perdue) est récupérée par un échange thermique au niveau de son échappement pour alimenter le cycle d'un turbocompresseur de récupération afin de produire un complément d'énergie mécanique à la génération auxiliaire de puissance ;
- lorsque l'aéronef est en altitude dit « mode altitude » dans lequel l'air de la cabine est pressurisé à un taux suffisant : ce même turbocompresseur, entraîné au moins partiellement par l'air récupéré en sortie de cabine puis chauffé par l'échange thermique au niveau de l'échappement, réalise un complément à la compression du compresseur de charge pour fournir le taux de compression requis pour alimenter l'ECS.

Selon des modes de mise en oeuvre particuliers :
- un deuxième échange thermique peut être réalisé entre l'air en sortie de cabine et l'air comprimé en entrée du système ECS ;
- le turbocompresseur forme, en mode altitude, un deuxième étage de compression d'air en entrée du système ECS ;
- l'aéronef étant en mode altitude, l"air comprimé par le turbocompresseur et l'air comprimé en sortie de cabine sont combinés, en amont de l'échange thermique à l'échappement, pour augmenter la puissance de la génération auxiliaire ;
- l'aéronef étant en mode altitude, la compression d'air réalisée par la turbo-compression est commutable pour être combinée soit à l'entrée du système ECS pour former un deuxième étage de compression, soit à la sortie de l'air cabine, en amont de l'échange thermique au niveau de l'échappement du générateur de gaz, pour augmenter la puissance de la génération auxiliaire.

L'invention se rapporte également à une architecture de récupération d'énergie apte à mettre en oeuvre ce procédé. Une telle architecture comporte un groupe auxiliaire de puissance présentant une tuyère d'échappement et intégrant un générateur de gaz équipé d'un arbre de transmission de puissance à un compresseur de charge pour fournir, via une veine d'alimentation, de l'air comprimé au système de conditionnement d'air ECS de la cabine passagers. De plus, cette architecture comporte un turbocompresseur de récupération accouplé, directement ou via une boîte de transmission ou tout moyen de couplage, à l'arbre du groupe APU. Ce turbocompresseur comporte une turbine de récupération alimentée par de l'air dans une branche aval d'un conduit monté sur un échangeur thermique équipant la tuyère d'échappement. Ce conduit présente une branche amont à l'échangeur, couplée à des canaux reliant les sorties d'air de la cabine et du compresseur du turbocompresseur de récupération à cette branche amont.

Selon des modes de réalisation préférés :
- un deuxième échangeur est monté entre la veine d'alimentation et le canal de sortie cabine de sorte que l'air en sortie de cabine et l'air comprimé en entrée du système ECS puissent réaliser un transfert thermique;
- les moyens de commutation de circulation d'air sont agencés respectivement entre la veine d'alimentation du système ECS et un canal d'entrée du compresseur du turbocompresseur de récupération, et entre le canal de sortie dudit compresseur et la branche amont du conduit monté sur l'échangeur thermique de la tuyère d'échappement, de sorte que le turbocompresseur est apte à former un deuxième étage de compression d'air en entrée du système ECS;
- l'air du canal de sortie du compresseur et celui du canal de sortie cabine présentent des taux de compression sensiblement équilibrés par un réglage de la section de passage d'un distributeur à calage variable équipant la turbine de récupération ;
- les moyens de commutation de circulation d'air sont des vannes motorisées et commandées par une unité de gestion centrale ;
- des clapets anti-retour peuvent être également avantageusement prévus dans des canaux, en particulier dans les canaux d'entrée d'air et de liaison à la sortie cabine, afin d'empêcher le refoulement d'air dans ces canaux lorsqu'ils sont rendus inactifs dans certains modes de fonctionnement.

### BRÈVE DESCRIPTION DES FIGURES

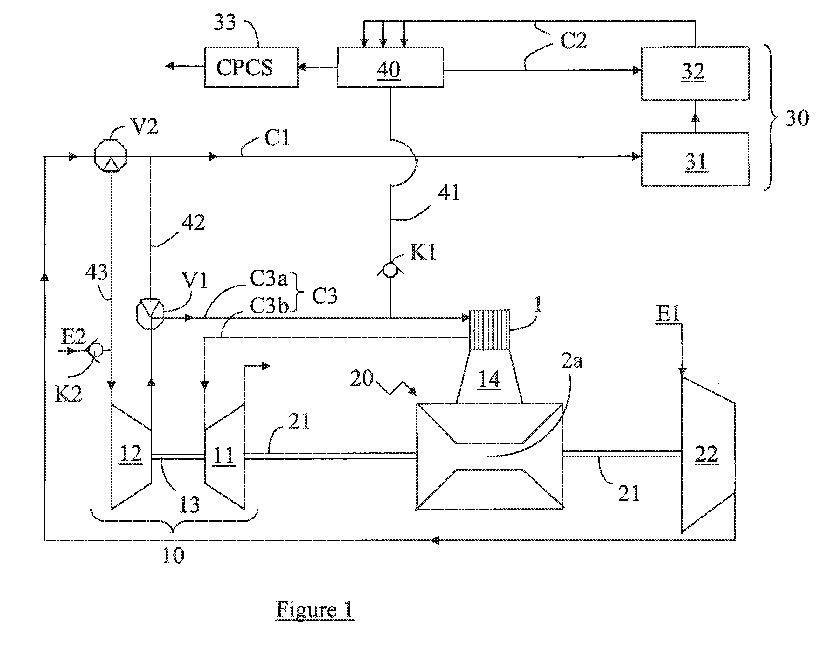

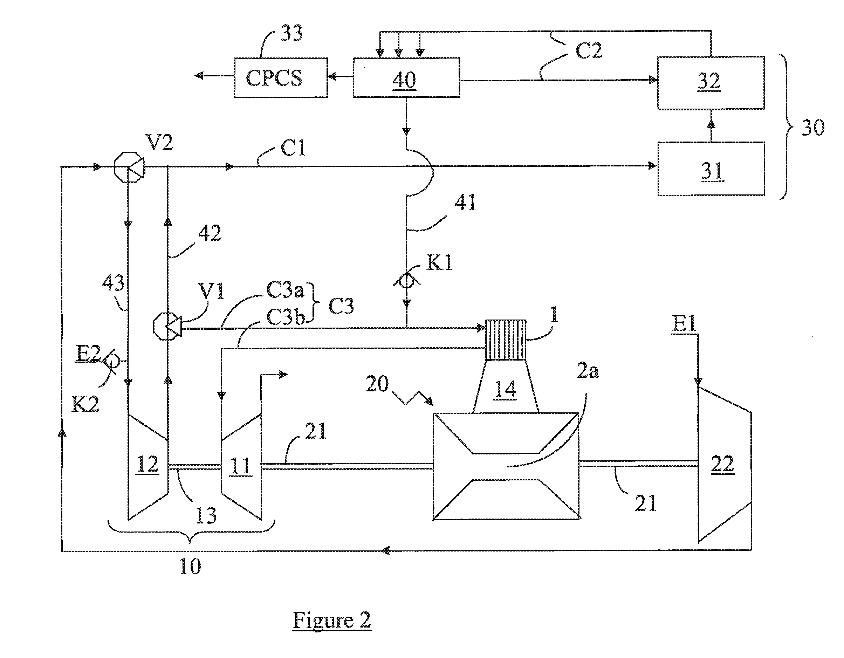

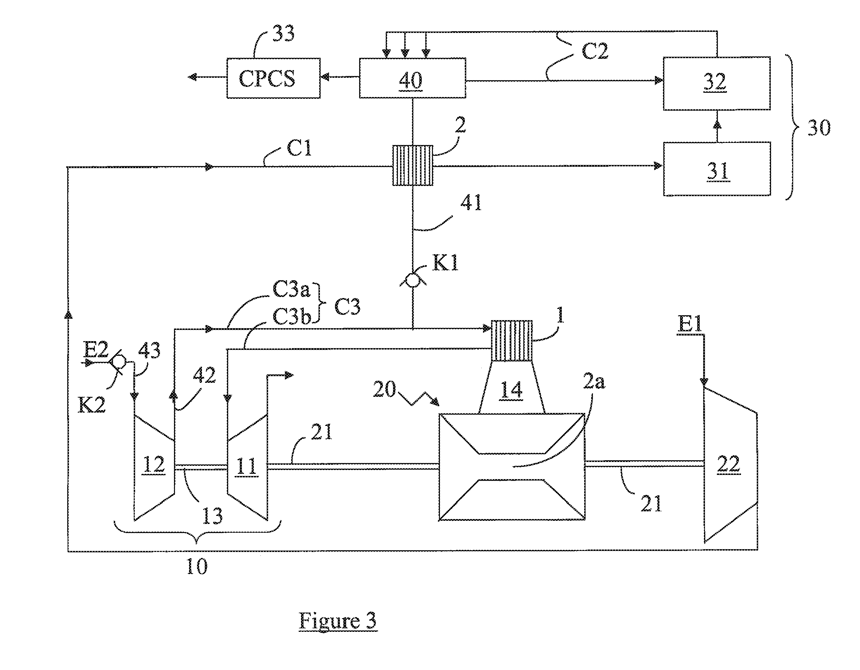

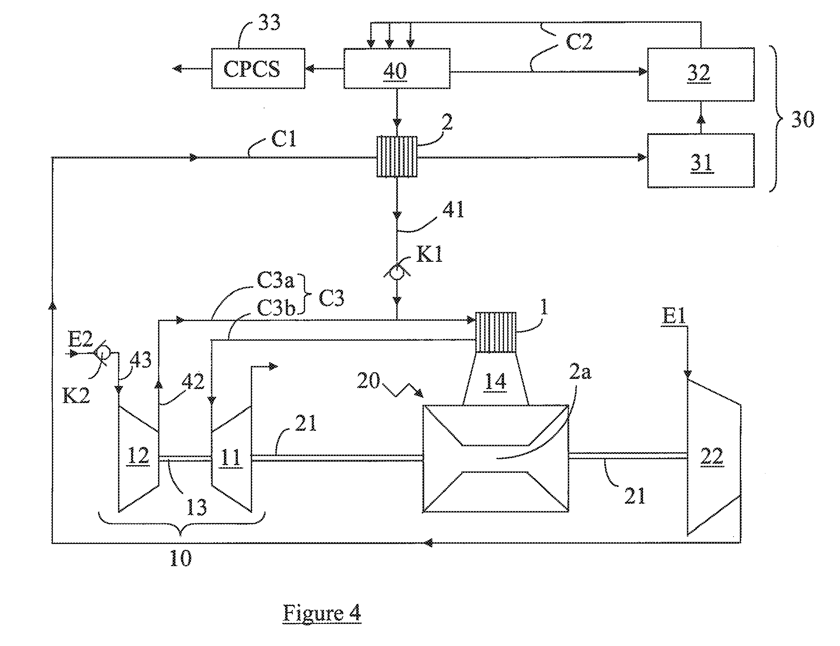

D'autres aspects, caractéristiques et avantages de l'invention apparaîtront dans la description non limitative qui suit, relative à des exemples de réalisation particuliers, en référence aux dessins annexés qui représentent, respectivement :
- en figure 1, le diagramme de fonctionnement d'un premier exemple d'architecture de récupération d'énergie selon l'invention lorsque l'aéronef est au sol ;
- en figure 2, le diagramme de fonctionnement de cet exemple d'architecture lorsque l'aéronef est en altitude suffisante pour que la cabine soit pressurisée, seul l'air provenant de la sortie cabine entraînant alors la turbine de récupération ;
- en figure 3, le diagramme de fonctionnement d'une variante de l'exemple d'architecture précédent comportant un échangeur entre la sortie cabine et la veine de liaison au système de conditionnement ECS, l'aéronef étant au sol ; et
- en figure 4, le diagramme de fonctionnement de l'exemple selon la figure 3 lorsque, l'aéronef étant en altitude suffisante, l'air en sortie de cabine et l'air en sortie de compresseur entraînent ensemble la turbine de récupération.

### DESCRIPTION DETAILLEE DE MODES DE REALISATION

Dans le présent texte, les termes « amont » et « aval » se rapportent à des localisations en fonction du sens de circulation de l'air.

En référence au diagramme de la figure 1, l'architecture de récupération d'énergie d'un aéronef comporte un turbocompresseur de récupération 10 - composé essentiellement d'une turbine de récupération 11, d'un compresseur 12, d'un arbre d'entraînement 13 et d'un échangeur thermique 1 placé dans la tuyère d'échappement des gaz 14 du groupe auxiliaire de puissance 20 (en abrégé APU). Le groupe APU comporte une turbomachine 2a d'arbre de transmission 21. Cette turbomachine se compose classiquement d'un compresseur, d'une chambre de combustion et d'une turbine d'entraînement.

Cet arbre 21 est accouplé, d'une part, à l'arbre d'entraînement 13 du turbocompresseur 10 - directement ou via un moyen de couplage comme une boîte de transmission (non représentées) ou équivalent - et, d'autre part, à un compresseur de charge 22 d'entrée d'air externe E1. Ce compresseur 22 alimente le système de conditionnement d'air ECS 30 de la cabine passagers 40 par une veine d'alimentation d'air comprimé C1. Un tel système ECS 30 comporte un pack de conditionnement 31 qui renouvelle l'air des compartiments de la cabine 40 par un circuit de recyclage C2 via un mélangeur 32. Un système de contrôle de la pression de la cabine passagers CPCS 33 (initiales de « Cabin Pressure Control System » en terminologie anglaise) régule la pression de la cabine passagers par un dosage du débit d'air de sortie.

Dans cette architecture, de l'air peut circuler dans un conduit C3 monté sur un échangeur thermique 1 agencé dans la tuyère 14 du groupe APU 20. La branche amont C3a du conduit C3 est reliée aux canaux 41 et 42, respectivement couplés aux sorties de la cabine 40 et du compresseur 12 du turbocompresseur de récupération 10. Une vanne trois voies V1 est montée à l'intersection du canal 42 et de la branche C3a. La branche aval C3b du conduit C3 est couplée à la turbine de récupération 11.

De plus, le canal 42 relie la sortie du compresseur 12 à la veine d'alimentation C1, alors qu'un canal 43 relie la veine C1 à l'entrée dudit compresseur 12 via une vanne V2 disposée à l'intersection veine/canal. Un canal d'entrée d'air externe E2 pour ce compresseur 12 est branché sur le canal 43. Les canaux 42 et 43 de liaison au compresseur 12 du turbocompresseur 10 sont ainsi montés sur la veine C1 en aval du compresseur de charge 22.

Lorsque l'aéronef est au sol, l'air de la cabine 40 n'est pas pressurisé. Le groupe APU 20 est démarré pour permettre la ventilation de la cabine 40, démarrer les moteurs et alimenter les consommateurs en énergie pneumatique et électrique via des boîtes de transmission appropriées.

La récupération d'énergie est alors effectuée, en mode « sol », par circulation d'air dans l'échangeur de chaleur 1 de la tuyère 14 du groupe APU 20 pour entraîner le turbocompresseur de récupération 10. Les vannes V2 et V1 sont réglées en rotation pour, respectivement, couper l'alimentation du canal 43 de sorte que le compresseur 12 est alimenté uniquement par l'entrée d'air extérieur E2, et pour que, en sortie de ce compresseur 12, l'air comprimé circule du canal 42 à la branche C3a du conduit C3. L'air comprimé et chauffé dans l'échangeur 1 est ensuite dirigé vers la turbine de récupération 11 du turbocompresseur 10 via la branche aval C3b.

Dans ces conditions, la turbine de récupération 11 contribue par son arbre 13 à entraîner le groupe APU 20 qui va pouvoir consommer moins de carburant pour obtenir une même puissance, en particulier pour entraîner le compresseur de charge 22. Avantageusement, un clapet anti-retour K1 est prévu dans le canal 41 afin d'empêcher l'air sous pression circulant dans la branche amont C3a de refouler dans le canal 41 de liaison à la cabine 40.

Lorsque l'aéronef est à une altitude suffisante, par exemple à partir de 3 ou 4 000 m, la cabine 40 est suffisamment pressurisée pour que l'architecture passe alors en mode « altitude », illustrée par la figure 2. Pour passer d'un mode à l'autre, les vannes V1 et V2 sont avantageusement motorisées et une unité de gestion centrale (non représentée) est programmée pour permettre la commutation de mode : cette unité transmet les signaux électriques correspondant aux configurations de réglage prédéterminées des vannes dans les intersections de canaux pour satisfaire au fonctionnement dans les deux modes et aux passages d'un mode à l'autre.

En mode « altitude », de l'air sous pression est transmis en sortie de cabine 40 dans le canal 41 d'accès à la branche amont C3a de l'échangeur de chaleur 1. La récupération d'énergie est ainsi issue, dans ce mode, de la pressurisation cabine. Comme dans le mode « sol », la turbine de récupération 11 est ensuite entraînée par la circulation d'air sous pression et chauffé issu de l'échangeur 1 via le canal aval C3b. La turbine contribue alors par son arbre 13 à entraîner le groupe APU 20 qui va pouvoir consommer ainsi moins de carburant pour obtenir une même puissance, en particulier pour entraîner le compresseur de charge 22.

Dans le même temps, les vannes V1 et V2 sont réglées pour que le compresseur 12 agisse comme deuxième étage de compression sur la veine C1 de fourniture d'air comprimé, en aval du compresseur de charge 22 faisant office de premier étage de compression. Pour ce faire, les vannes V2 et V1 sont commandées en rotation par l'unité pour que, respectivement, la veine C1 communique avec le canal 43 relié à l'entrée du compresseur 12 et le canal 42 communique avec la veine C1. Avantageusement, un clapet anti-retour K2 est prévu dans le canal d'entrée d'air E2 afin d'empêcher l'air sous pression circulant dans le canal 43 de refouler dans le canal E2.

Selon une variante d'architecture, illustrée par les diagrammes des figures 3 et 4, une double récupération d'énergie est réalisée en mode « altitude » en bénéficiant à la fois de l'air pressurisé en sortie de cabine 40 et de l'air en sortie de compression du turbocompresseur 10.

En référence à la figure 3, la variante d'architecture reprend les mêmes organes que l'architecture précédente avec les mêmes signes de référence. Les canaux d'entrée/sortie 42 et 43 du compresseur 12 du turbocompresseur de récupération 10 ne sont plus reliés à la veine d'alimentation C1 : le canal 43 n'est alimenté que par l'entrée d'air extérieur E2 et le canal 42 se prolonge par la branche amont C3a de l'échangeur thermique 1.

De plus, un autre échangeur thermique 2 est prévu entre la veine d'alimentation C1 - en sortie du compresseur de charge 12 - et le canal 41 en sortie de la cabine 40. Cet échangeur 2 sera utilisé en mode « altitude » (figure 4).

En mode « sol » (figure 3), la récupération d'énergie est semblable à celle opérée avec la première architecture (voir figure 1) par circulation de l'air dans l'échangeur de chaleur 1 de la tuyère 14 du groupe APU 20 afin d'entraîner la turbine de récupération 11 puis, partiellement, le groupe APU et le compresseur de charge 22. Cette architecture présente l'avantage de ne pas nécessiter de vanne.

En mode « altitude » tel qu'illustré par la figure 4, l'air sous pression du canal 41 en sortie de cabine 40 est chauffé une première fois par passage dans l'échangeur thermique 2. Cet échangeur permet également d'abaisser la température de l'air de la veine C1, afin de compenser - au niveau du fonctionnement de l'ECS - une compression moindre réalisée par cette architecture dans la veine d'alimentation C1 par rapport à la version précédente, qui possédait deux étages de compression. En effet, le compresseur 12 n'assure plus ici la fonction de deuxième étage de compression pour l'air de la veine C1.

L'invention n'est pas limitée aux exemples décrits et représentés.

Il est par exemple possible de passer en mode « altitude » de la première architecture à la variante d'architecture. En d'autres termes, de passer-de manière automatique par l'unité de gestion ou manuelle par le pilote - d'une récupération simple à partir de la sortie de cabine (figure 2) à une récupération double, réunissant les canaux 41 de sortie de cabine et 42 du compresseur 12 (figure 4).

Pour ce faire, les vannes V1 et V2 de la première version (figures 1 et 2) sont commandées pour pouvoir commuter, de manière réversible et lorsque l'aéronef est en altitude, des positions définies en mode « sol » aux positions définies en mode « altitude » et vice-versa. La présence de l'échangeur 2 peut être avantageusement conservée pour être compatible du plus faible taux de pression dans la veine C1 lorsque les vannes sont dans les positions définies en mode « sol ».

## Revendications

1. Procédé de récupération d'énergie dans un aéronef équipé d'une cabine de passagers (40) à flux d'air régulé en pression et en température à l'aide d'un système de conditionnent d'air ECS (30) alimenté par un compresseur de charge (22), et d'une génération auxiliaire de puissance (20), **caractérisé en ce qu'**il consiste à prévoir que :
- lorsque l'aéronef est au sol dit « mode sol », l'énergie thermique dissipée par la génération auxiliaire de puissance (20) est récupérée par un échange thermique (1) au niveau de son échappement (14) pour alimenter le cycle d'un turbocompresseur de récupération (10) afin de produire un complément d'énergie mécanique à la génération auxiliaire de puissance (20) ;
- lorsque l'aéronef est en altitude dit mode « altitude » dans lequel l'air de la cabine est pressurisé à un taux suffisant, ce même turbocompresseur (10), entraîné au moins partiellement par l'air récupéré en sortie de cabine (40) puis chauffé par l'échange thermique (1) au niveau de l'échappement (14), réalise un complément à la compression du compresseur de charge (22) pour fournir le taux de compression requis pour alimenter l'ECS (30).

2. Procédé de récupération selon la revendication précédente, dans lequel un deuxième échange thermique (2) est réalisé entre l'air relativement plus froid en sortie de cabine (40) et l'air comprimé relativement plus chaud en entrée du système ECS (30).

3. Procédé de récupération selon l'une des revendications précédentes, dans lequel le turbocompresseur (10) forme, en mode altitude, un deuxième étage de compression d'air en entrée du système ECS (30).

4. Procédé de récupération selon l'une des revendication 1 ou 2 dans lequel, l'aéronef étant en mode altitude, l'air comprimé par le turbocompresseur (10) et l'air comprimé en sortie de cabine (40) sont combinés en amont de l'échange thermique (1) réalisé à l'échappement (14) pour augmenter la puissance de la génération auxiliaire (20).

5. Procédé de récupération selon l'une des revendications précédentes dans lequel, l'aéronef étant en mode altitude, la compression d'air produite par le turbocompresseur (10) est commutable pour être combinée soit à l'entrée du système ECS pour former un deuxième étage de compression, soit à la sortie de l'air cabine, en amont de l'échange thermique au niveau de l'échappement du générateur de gaz, pour augmenter la puissance de la génération auxiliaire.

6. Architecture de récupération d'énergie apte à mettre en oeuvre le procédé selon l'une des revendications précédentes, comportant un groupe auxiliaire de puissance APU (20) présentant une tuyère d'échappement (14) et intégrant un générateur de gaz (2a) équipé d'un arbre de transmission (21) de puissance à un compresseur de charge (22) pour fournir, via une veine d'alimentation (C1), de l'air comprimé au système de conditionnement d'air ECS (30) de la cabine passagers (40), cette architecture comportant également un turbocompresseur de récupération (10) accouplé à l'arbre (21) du groupe APU (20), ce turbocompresseur (10) comportant une turbine de récupération (11) alimentée par de l'air circulant dans une branche aval (C3b) d'un conduit (C3) monté sur un échangeur thermique (1) équipant la tuyère d'échappement (14), et ce conduit (C3) présentant une branche amont (C3a) à l'échangeur (1), couplée à des canaux (41, 42) reliant les sorties d'air de la cabine (40) et du compresseur (12) du turbocompresseur de récupération (10) à cette branche amont (C3a).

7. Architecture de récupération d'énergie selon la revendication précédente, dans laquelle un deuxième échangeur (2) est monté entre la veine d'alimentation (C1) et le canal de sortie cabine (41) de sorte que l'air en sortie de cabine (40) et l'air comprimé en entrée du système ECS (30) puissent réaliser un transfert thermique.

8. Architecture de récupération d'énergie selon l'une des revendications 6 ou 7, dans laquelle des moyens de commutation de circulation d'air (V2, V1) sont agencés respectivement entre la veine d'alimentation (C1) au système ECS (30) et un canal d'entrée du compresseur (12) du turbocompresseur de récupération (10), et entre le canal de sortie (42) dudit compresseur (12) et la branche amont (C3a) du conduit (C3) monté sur l'échangeur thermique (1) de la tuyère d'échappement (14), de sorte que le turbocompresseur (10) est apte à former un deuxième étage de compression d'air en entrée du système ECS (40).

9. Architecture de récupération d'énergie selon l'une des revendications 6 à 8, dans laquelle l'air du canal de sortie (42) du compresseur (12) et du canal de sortie cabine (41) présentent des taux de compression sensiblement équilibrés par un réglage de la section de passage d'un distributeur à calage variable équipant la turbine de récupération (11).

10. Architecture de récupération d'énergie selon l'une des revendications 6 à 9, dans laquelle les moyens de commutation de circulation d'air sont des vannes (V1, V2) motorisées et commandées par une unité de gestion centrale.

## Patentansprüche

1. Verfahren zur Rückgewinnung von Energie in einem Flugzeug, das mit einer Kabine für Passagiere (40) mit einem Luftstrom, dessen Druck und Temperatur mit Hilfe eines Systems zur Konditionierung der Luft ECS (30) geregelt ist, das von einem Lastkompressor (22) versorgt wird, und mit einer zusätzlichen Leistungserzeugung (20) ausgestattet ist, **dadurch gekennzeichnet, dass** es darin besteht vorzusehen, dass:
- während das Flugzeug am Boden ist, was "Modus Boden" genannt wird, die thermische Energie, die durch die zusätzliche Leistungserzeugung (20) dissipiert wird, durch einen Wärmeaustausch (1) bei der Entlüftung (14) zur Versorgung des Zyklus eines Turbokompressors zur Rückgewinnung (10) zurückgewonnen wird, um einen mechanischen Zusatz von Energie bei der zusätzlichen Leistungserzeugung (20) zu erzeugen;
- während das Flugzeug in der Höhe ist, was "Modus Höhe" genannt wird, in dem die Luft der Kabine mit einer ausreichenden Rate unter Druck gesetzt wird, dieser gleiche Turbokompressor (10), der zumindest teilweise von der zurückgewonnenen Luft am Ausgang der Kabine (40) angetrieben wird, die danach durch den Wärmeaustausch (1) bei der Entlüftung (14) erwärmt wird, einen Zusatz der Komprimierung des Lastkompressors (22) umsetzt, um die Rate der Kompression zu liefern, die für die Versorgung des ECS (30) erforderlich ist.

2. Verfahren zur Rückgewinnung nach dem vorhergehenden Anspruch, in dem ein zweiter Wärmeaustausch (2) zwischen der Luft, die relativ kälter ist, am Ausgang der Kabine (40) und der komprimierten Luft, die relativ wärmer ist, am Eingang des Systems ECS (30) umgesetzt wird.

3. Verfahren zur Rückgewinnung nach einem der vorhergehenden Ansprüche, in dem der Turbokompressor (10) in Modus Höhe eine zweite Stufe der Kompression von Luft am Eingang des Systems ECS (30) bildet.

4. Verfahren zur Rückgewinnung nach einem der Ansprüche 1 oder 2, im dem, wenn das Flugzeug im Modus Höhe ist, die Luft, die von dem Turbokompressor (10) komprimiert wird, und die Luft, die am Ausgang der Kabine (40) komprimiert wird, stromaufwärts von dem Wärmeaustausch (1) kombiniert werden, der bei der Entlüftung (14) ausgebildet ist wird, um die Leistung der zusätzlichen Erzeugung (20) zu erhöhen.

5. Verfahren zur Rückgewinnung nach einem der vorhergehenden Ansprüche, in dem, wenn das Flugzeug im Modus Höhe ist, die Kompression der Luft, die von dem Turbokompressor (10) erzeugt wird, vertauschbar ist, um entweder am Eingang des Systems ECS, um eine zweite Stufe der Kompression zu bilden, oder am Ausgang für Luft der Kabine stromaufwärts von dem Wärmetausch bei der Entlüftung des Gasgenerators, um die Leistung des zusätzlichen Generators zu erhöhen, kombiniert zu werden.

6. Architektur zur Rückgewinnung von Energie, die eingerichtet ist, um das Verfahren nach einem der vorhergehenden Ansprüche umzusetzen mit einer zusätzlichen Leistungsgruppe APU (20), die eine Düse zur Entlüftung (14) aufweist und einen Gasgenerator (2a) integriert, der mit einer Leistungsantriebswelle (21) für einen Lastkompressor (22) ausgestattet ist, um über eine Ader zur Versorgung (C1) komprimierte Luft zu dem System zur Konditionierung von Luft ECS (30) der Kabine für Passagiere (40) zu liefern, wobei diese Architektur gleichfalls einen Turbokompressor zur Rückgewinnung (10) umfasst, der mit der Welle (21) der Gruppe APU (20) gekoppelt ist, wobei der Turbokompressor (10) eine Turbine zur Rückgewinnung (11) aufweist, die mit Luft versorgt wird, die in einem stromabwärts gelegenen Bereich (C3b) einer Leitung (C3) zirkuliert, die über einen Wärmetauscher (1) angebracht ist, der mit einer Düse zur Entlüftung (14) ausgestattet ist, und wobei die Leitung (C3) einen stromaufwärts gelegenen Bereich (C3a) bei dem Tauscher (1) aufweist, der mit Kanälen (41, 42) gekoppelt ist, welche die Ausgänge für Luft der Kabine (40) und des Kompressors (12) des Turbokompressors zur Rückgewinnung (10) mit dem stromaufwärts gelegenen Bereich (C3a) verbinden.

7. Architektur zur Rückgewinnung von Energie nach dem vorhergehenden Anspruch, in der ein zweiter Tauscher (2) zwischen der Ader zur Versorgung (C1) und dem Kanal am Ausgang der Kabine (41) so angebracht ist, dass die Luft am Ausgang der Kabine (40) und die komprimierte Luft am Eingang des Systems ECS (30) einen Wärmeaustausch ausführen können.

8. Architektur zur Rückgewinnung von Energie nach einem der Ansprüche 6 oder 7, in dem Mittel zum Vertauschen der Zirkulation der Luft (V2, V1) jeweils zwischen der Ader zur Versorgung (C1) zu dem System ECS (30) und einem Kanal am Eingang zu dem Kompressor (12) des Turbokompressors zur Rückgewinnung (10) und zwischen dem Kanal am Ausgang (42) des Kompressors (12) und der stromaufwärts gelegenen Bereichs (C3a) der Leitung (C3), die über dem Wärmeaustauscher (1) der Düse zur Entlüftung (14) angebracht ist, angeordnet sind, so dass der Turbokompressor (10) eingerichtet ist, eine zweite Stufe der Kompression der Luft am Eingang des Systems ECS (40) zu bilden.

9. Architektur zur Rückgewinnung von Energie nach einem der Ansprüche 6 bis 8, in dem die Luft des Kanals am Ausgang (42) des Kompressors (12) und des Kanals am Ausgang der Kabine (41) Raten der Kompression aufweisen, die im Wesentlichen durch eine Regulierung des Abschnitts des Durchgangs eines Verteilers mit variabler Einstellung ausgeglichen werden, mit denen die Turbine zur Rückgewinnung (11) ausgestattet ist.

10. Architektur zur Rückgewinnung von Energie nach einem der Ansprüche 6 bis 9, in der die Mittel zum Vertauschen der Luftzirkulation Ventile (V1, V2) sind, die motorisiert sind und von einer zentralen Steuereinheit gesteuert werden.

## Claims

1. Method for recovery of energy in an aircraft fitted with a passenger cabin (40) having an air flow regulated in terms of pressure and temperature using an ECS air conditioning system (30) powered by a load compressor (22), and auxiliary power generation (20), **characterised in that** it consists in providing that:
- when the aircraft is on the ground, known as "ground" mode, the thermal energy dissipated by auxiliary power generation (20) is recovered by heat exchange (1) in its exhaust (14) so as to power the cycle of a recovery turbocharger (10) in order to produce mechanical energy in addition to auxiliary power generation (20);
- when the aircraft is at altitude, known as "altitude" mode, in which the cabin air is pressurised to a sufficient level, said turbocharger (10), driven at least partly by the air recovered as it leaves the cabin (40) and then heated by heat exchange (1) in the exhaust (14), produces compression in addition to that of the load compressor (22), so as to provide the compression rate required to power the ECS (30).

2. Method according to Claim 1, wherein a second heat exchange (2) is performed between the relatively colder air leaving the cabin (40) and the relatively warmer compressed air entering the ECS system (30).

3. Method according to Claim 1 or Claim 2, wherein the turbocharger (10), in altitude mode, forms a second air compression stage at the inlet of the ECS system (30).

4. Method according to Claim 1 or Claim 2, wherein, while the aircraft is in altitude mode, the air compressed by the turbocharger (10) and the compressed air leaving the cabin (40) are combined upstream of the heat exchange (1) produced at the exhaust (14), so as to increase the power of the auxiliary generation (20).

5. Method according to one of Claims 1 to 4, wherein, while the aircraft is in altitude mode, the air compression produced by the turbocharger (10) is switchable so as to be combined either at the inlet of the ECS system to form a second compression stage, or at the cabin air outlet, upstream of the heat exchange in the exhaust from the gas generator, so as to increase the power of the auxiliary generation.

6. Architecture for recovery of energy capable of implementing the method according to one of the preceding claims, including an auxiliary power unit APU (20) having an exhaust nozzle (14) and incorporating a gas generator (2a) fitted with a shaft (21) for transmitting power to a load compressor (22) so as to supply, via a supply duct (C1), compressed air to the air conditioning system ECS (30) of the passenger cabin (40), this architecture also including a recovery turbocharger (10) connected to the shaft (21) of the APU (20), this turbocharger (10) including a recovery turbine (11) powered by air circulating in a downstream branch (C3b) of a conduit (C3) mounted on a heat exchanger (1) fitted to the exhaust nozzle (14), and this conduit (C3) having a branch (C3a) upstream of the exchanger (1), connected to channels (41, 42) linking the air outlets of the cabin (40) and the compressor (12) of the recovery turbocharger (10) to this upstream branch (C3a).

7. Architecture according to Claim 6, wherein a second exchanger (2) is mounted between the supply duct (C1) and the cabin outlet channel (41) such that the air leaving the cabin (40) and the compressed air entering the ECS system (30) can transfer heat.

8. Architecture according to Claim 6 or Claim 7, wherein means for switching the air circulation (V2, V1) are arranged respectively between the supply duct (C1) to the ECS system (30) and an inlet channel of the compressor (12) of the recovery turbocharger (10), and between the outlet channel (42) of said compressor (12) and the upstream branch (C3a) of the conduit (C3) mounted on the heat exchanger (1) of the exhaust nozzle (14), such that the turbocharger (10) is capable of forming a second air compression stage at the inlet of the ECS system (40).

9. Architecture according to one of Claims 6 to 8, wherein the air from the outlet channel (42) of the compressor (12) and from the cabin outlet channel (41) have compression rates substantially balanced by adjusting the flow area of a variable-pitch distributor fitted to the recovery turbine (11).

10. Architecture according to one of Claims 6 to 9, wherein the means for switching the air circulation are motorised valves (V1, V2) controlled by a central management unit.
